# EUROPEAN PATENT SPECIFICATION

(11) **EP 3 686 060 B1**
(45) Date of publication and mention of the grant of the patent: **05.05.2021**
(21) Application number: 19152972.6
(22) Date of filing: 22.01.2019
(51) Int. Cl.: B60R 7/04

(54) **APPARATUS FOR RECEIVING OBJECTS IN A CAVITY IN A VEHICLE**
VORRICHTUNG ZUR AUFNAHME VON OBJEKTEN IN EINEM HOHLRAUM IN EINEM FAHRZEUG
APPAREIL DE RÉCEPTION D'OBJETS DANS UNE CAVITÉ D'UN VÉHICULE

(43) Date of publication of application: 29.07.2020
(73) Proprietor: AUDI AG, 85045 Ingolstadt (DE)
(72) Inventor: Müller, Ulrich, 85055 Ingolstadt (DE); Hélot, Jacques, 85051 Ingolstadt (DE); Redeker, Immo, 85051 Ingolstadt (DE); Wall, Christian, 85122 Hitzhofen (DE)

(56) References cited:
- EP-A1- 1 792 782
- DE-A1- 2 016 007
- DE-A1- 19 536 894
- DE-U- 1 717 575
- GB-A- 964 408
- JP-A- 2003 314 938
- US-A- 6 003 923
- US-A1- 2002 109 376
- US-A1- 2015 343 936

## Description

The invention relates to a vehicle comprising a compartment with a cavity and an apparatus for receiving objects in the cavity, the cavity being accessible from the outside and from the interior of the vehicle.

Patent document DE 2 016 007 A1 discloses a money transport vehicle having secure access to a compartment from within and from outside the vehicle.

For the transport of objects by means of a vehicle, for example, pizza deliveries, it is known from practice to provide a drawer in the bumper area, which can be opened from the outside and thus releases a cavity in which items are stored.

A disadvantage of this known solution, however, is that the drawer is not accessible from the interior. For loading and/or unloading, if necessary, a person has to get out of the vehicle or, if the drawer is close to the boot, it is cumbersome in the case of a SUV or estate car to get from the inside to the boot. Also, luggage may not block the way.

It is therefore an object of the present invention to provide an apparatus for receiving objects in a cavity in a vehicle, which is more easily accessible.

According to the invention this object is achieved by the features mentioned in claim 1.

By means of an accessibility of the cavity from the vehicle interior with an opening member which can be actuated from the inside, and also by an opening of the cavity to the outside, the cavity can be loaded and unloaded in a simple manner depending on the requirements. This means that an occupant of the vehicle does not have to get out extra, but can access the object inside the cavity from inside or deposit an object there. However, with an access authorization that allows an opening to the outside, the cavity can also be accessed from outside the vehicle. The access to the cavity can be done for example by a flap or a door. Likewise, for actuation, an unlocking member may be provided, by means of which, for example, a compartment with a cavity can be folded or pivoted to the outside.

For safety reasons, it is provided that when opening the second opening from the outside, the first opening member as access to the interior of the vehicle can be blocked.

The cavity is arranged in a side door of the vehicle. The cavity is provided in a region of a side mirror, wherein for accessibility to the cavity the side mirror is designed in a foldable or hinged manner.

In the following, the invention is described in principle with reference to the drawings.

In the figures:
- Figure 1: is a side perspective view of a part of a vehicle with a compartment arranged in the lower region of a side door and foldable to the outside;
- Figure 2: is a vertical section through the door in the region of the compartment with the compartment closed;
- Figure 3: shows a section corresponding to figure 2 with the compartment pivoted to the outside;
- Figure 4: shows a perspective view of the inventive vehicle in the region of the side door with an exterior mirror;
- Figure 5: shows a section along the line A-A in figure 4 with a closed opening from the outside;
- Figure 6: shows a section along the line A-A in figure 4 with an opening opened to the outside;
- Figure 7: is a perspective view with an opening member opened to the inside;
- Figure 8: is a horizontal section through a vehicle in the region of a door with a further alternative configuration of the compartment.
- Figure 9: is a perspective view with a compartment in the car wing
- Figure 10: is a perspective view of the compartment in the car wing according to figure 9 from the interior of the vehicle.

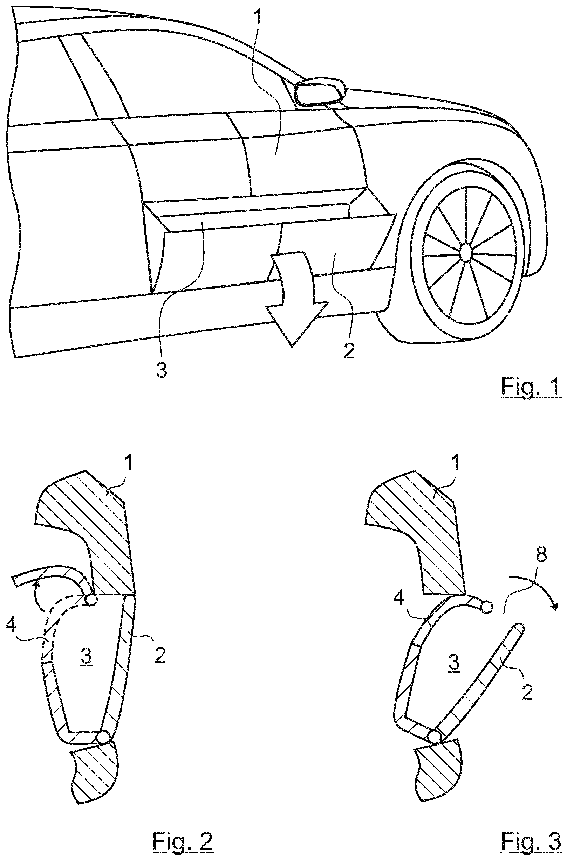

Figures 1 to 3 show a region of a side door 1 with a compartment 2 which can be folded out of the side door 1 and which has a cavity 3. In figures 1 and 3, the compartment 2 is shown in the open position for access to the compartment 2 from the outside. In this position, for loading and/or unloading the cavity 3 can be reached through an opening 8 from the outside.

Figure 2 shows the compartment 2 with the cavity 3 in a closed position. An opening member 4 can be pivoted inwards in the direction of an arrow to allow access to the cavity 3 from the inside. Of course, the opening member 4 in the form of a flap is only shown as an example. According to the invention, different opening members are possible to ensure access from the inside, in which it should be ensured that in an externally accessible state of the compartment 2 there is no possibility to operate the opening member 4 for access into the interior of the vehicle.

Instead of the possibility to fold out the compartment 2 from the door to release the opening 8, for releasing the cavity 3 to the outside a door or a flap in the side door 1 may of course be provided, which can be opened by an actuator.

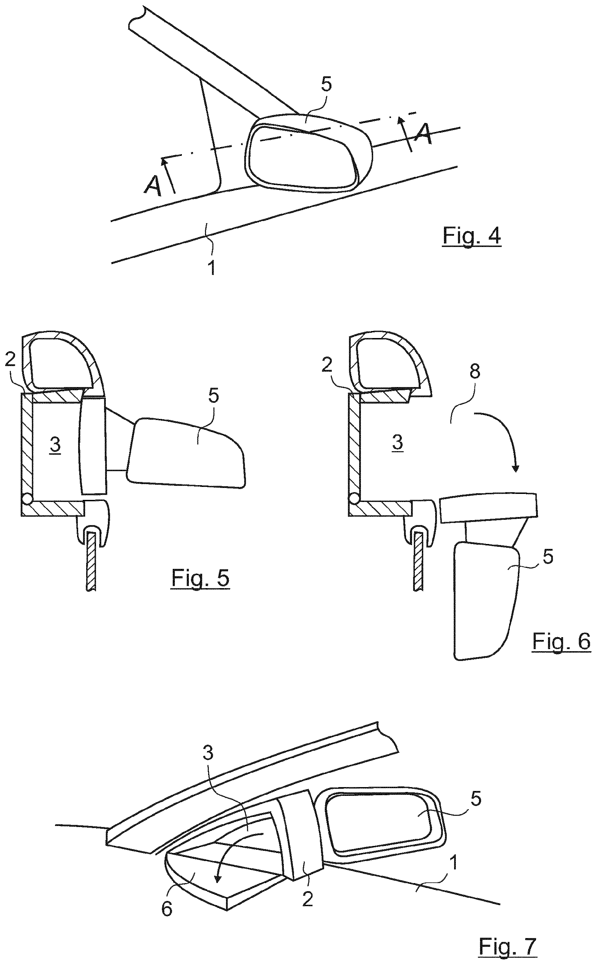

Figures 4 to 7, which disclose an embodiment according to the invention, show a compartment 2 having a cavity 3 in a smaller configuration in the region of a side mirror 5 of a side door 1.

Figure 5 shows the compartment 2 in a section along the line A-A in figure 4 in the closed state.

Figure 6 shows the compartment 2 in a section in the open state with the opening 8 released by means of the side mirror 5 folded against the driving direction, whereby the cavity 3 is accessible from the outside.

Figure 7 shows a compartment 2 according to figure 4 with the side mirror 5, the compartment 2 being accessible from the inside by means of an opening member 6. For safety reasons, however, it will generally be provided that the opening member 6 cannot be opened without the approval of a vehicle occupant, when at the same time the side mirror 5 is folded back and thus the opening 8 is free to the outside.

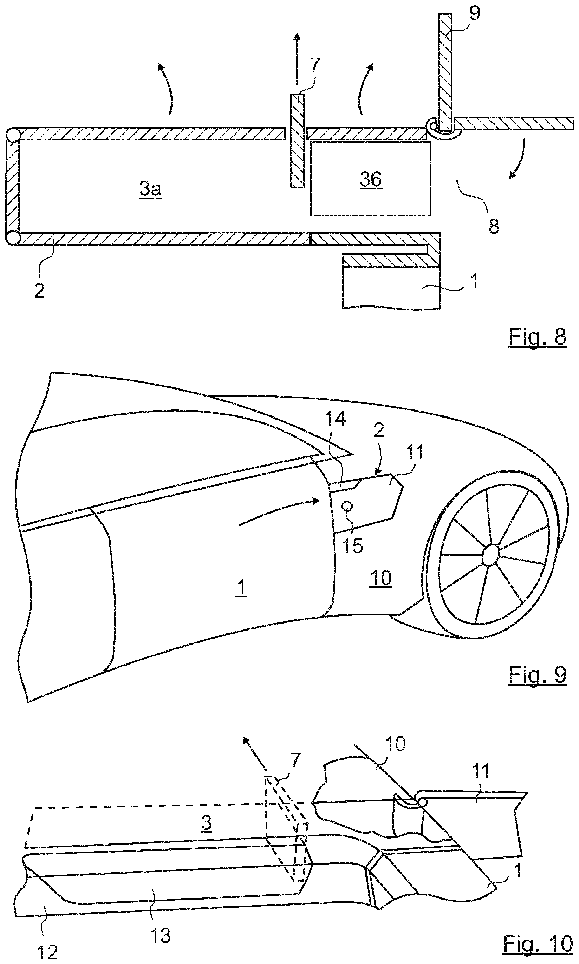

Figure 8 shows in a schematic representation a section through the lower area of a side door 1, the cavity 3 being formed in the compartment 2 in two parts with cavities 3a and 3b. For this purpose, the compartment 2 is divided into two compartments by an intermediate door 7. To form only one large cavity 3, the intermediate door 7 can also be pulled out of the cavity 3. A partition of the cavity 3 in two departments is advantageous, if different objects should be accommodated in the cavities 3a and 3b. Thus, for example, the cavity 3a can be designed as a cooling compartment for cooling food or for heating food or keeping it warm by means of a heating device, such as a microwave. By means of a flap 9 in the door 1, the compartment 2 is accessible from the outside.

Instead of arranging the compartment 2 with the cavity 3 in a side door, it can of course also be arranged at a different location in the vehicle. This applies, for example, for the car wing of a vehicle, from the vehicle interior then the cavity 3 being accessible.

In figures 9 and 10 this possibility is shown. As can be seen, in a car wing 10 there is a flap 11 which can be opened to the outside. The compartment 2 behind extends with its cavity 3 in the direction of travel in front of the control panel 12 or in or in front of the dashboard of the vehicle. Then the compartment 2 can be opened from the inside of the vehicle via a flap 13 and thus the cavity can be filled with objects or they can be taken out. In this case, there can also be a partition of the cavity 3 via an intermediate door 7, for example to form a compartment part as a refrigerator or to provide it with a microwave.

Of course, it is also possible to accommodate a compartment 2 with a cavity 3 in the rear door of a vehicle.

The accessibility to the cavity 3 may be allowed in various ways to deposit or receive an object there.

This way, for example, delivered food can be withdrawn from the outside with the approval of the driver from the outside without the driver having to exit. Likewise, when ordering or picking up a parcel, the parcel or the objects may be deposited in the cavity 3 made accessible from the outside.

The approval for opening the cavity 3 from the outside can be done in various ways. This can be made possible for example by a deliverer with a mobile phone with a QR code in front of a camera 14 at the compartment 2 to be opened or by means of a separate opening means for an accessibility of the cavity 3 from the outside. Likewise, an arrangement or accessibility via a display or a light signal 15 in the flap 11 is possible.

The unlocking of the compartment 2 for accessibility from the outside can either take place manually or electro-mechanically. The compartment can also be closed automatically or manually after loading from the outside.

## Claims

1. Vehicle comprising a compartment (2) with a cavity (3) and an apparatus for receiving objects in the cavity (3), the cavity (3) being accessible from the outside and from the interior of the vehicle, wherein the cavity (3) can be closed by an opening member (4,6) and is accessible to the outside via an opening (8), wherein upon release of the opening (8) to the outside the opening member (4,6) as access to the interior of the vehicle can be blocked, wherein the compartment (2) with the cavity (3) is arranged in a side door (1) of the vehicle in a region of a side mirror (5), the side mirror (5) being designed foldable for releasing the cavity (3) to the outside.

2. Vehicle according to claim 1, wherein
the compartment (2) is foldable or pivotable to the outside.

## Patentansprüche

1. Fahrzeug, umfassend ein Kompartiment (2) mit einem Hohlraum (3) und eine Einrichtung zum Aufnehmen von Gegenständen in dem Hohlraum (3), wobei der Hohlraum (3) von der Außenseite und von der Innenseite des Fahrzeugs zugänglich ist, wobei der Hohlraum (3) durch ein Öffnungselement (4, 6) geschlossen werden kann und über eine Öffnung (8) zu der Außenseite zugänglich ist, wobei bei Freigabe der Öffnung (8) an die Außenseite das Öffnungselement (4, 6) als Zugang zu der Innenseite des Fahrzeugs blockiert werden kann, wobei das Kompartiment (2) mit dem Hohlraum (3) in einer Seitentür (1) des Fahrzeugs in einem Bereich eines Seitenspiegels (5) angeordnet ist, wobei der Seitenspiegel (5) zum Freigeben des Hohlraums (3) an die Außenseite faltbar entworfen ist.

2. Fahrzeug nach Anspruch 1, wobei
das Kompartiment (2) faltbar oder zu der Außenseite schwenkbar ist.

## Revendications

1. Véhicule comprenant un compartiment (2) avec une cavité (3) et un appareil pour recevoir des objets dans la cavité (3), la cavité (3) étant accessible à partir de l'extérieur et à partir de l'intérieur du véhicule, dans lequel la cavité (3) peut être fermée par un élément d'ouverture (4,6) et est accessible à l'extérieur via une ouverture (8), dans lequel, lors de la libération de l'ouverture (8) vers l'extérieur, l'élément d'ouverture (4,6) en tant qu'accès à l'intérieur du véhicule peut être bloqué, dans lequel le compartiment (2) avec la cavité (3) est agencé dans une portière latérale (1) du véhicule dans une région d'un miroir latéral (5), le miroir latéral (5) étant conçu de manière pliable pour libérer la cavité (3) vers l'extérieur.

2. Véhicule selon la revendication 1, dans lequel
le compartiment (2) est pliable ou pivotable vers l'extérieur.
